# EUROPÄISCHE PATENTSCHRIFT

(11) **EP 2 414 599 B1**
(45) Veröffentlichungstag und Bekanntmachung des Hinweises auf die Patenterteilung: **25.11.2015**
(21) Anmeldenummer: 10715682.0
(22) Anmeldetag: 29.03.2010
(51) Int. Cl.: E04B 1/80

(54) **DÄMMITTEL ZUR HERSTELLUNG EINES WÄRMEDÄMMSYSTEMS, WÄRMEDÄMMSYSTEM SOWIE GEBÄUDEHÜLLE MIT EINEM WÄRMEDÄMMSYSTEM**
INSULATING MEANS FOR PRODUCING A HEAT INSULATING SYSTEM, HEAT INSULATING SYSTEM AND BUILDING SHELL COMPRISING A HEAT INSULATING SYSTEM
ÉLÉMENT D'ISOLATION POUR LA RÉALISATION D'UN SYSTÈME D'ISOLATION THERMIQUE, SYSTÈME D'ISOLATION THERMIQUE ET ENVELOPPE DE BÂTIMENT COMPORTANT UN SYSTÈME D'ISOLATION THERMIQUE

(30) Priorität: 02.04.2009 DE 102009015617; 18.05.2009 DE 102009021813
(43) Veröffentlichungstag der Anmeldung: 08.02.2012
(73) Patentinhaber: EWALD DÖRKEN AG, 58313 Herdecke (DE)
(72) Erfinder: SCHRÖER, Jörn, D-58313 Herdecke (DE); WAGNER-DITTRICH, Janine, D-44388 Dortmund (DE)
(74) Vertreter: Von Rohr Patentanwälte Partnerschaft mbB
(86) Internationale Anmeldenummer: PCT/EP2010/001966
(87) Internationale Veröffentlichungsnummer: WO 2010/112188

(56) Entgegenhaltungen:
- EP-A1- 1 818 468
- EP-A2- 1 544 367
- EP-A2- 1 707 349
- EP-A2- 1 715 110
- DE-A1-102004 044 410
- US-A- 5 500 305

## Beschreibung

Die Erfindung betrifft ein Dämmittel mit wenigstens einer Vakuumdämmplatte zur Herstellung eines Wärmedämmsystems. Desweiteren betrifft die vorliegende Erfindung ein Wärmedämmsystem mit wenigstens einem Dämmittel der vorgenannten Art sowie eine Gebäudehülle mit einem vorgenannten Wärmedämmsystem.

Konventionelle Dämmstoffe weisen eine Wärmeleitfähigkeit von beispielsweise 0,024 bis 0,050 W/m · K auf. Flexible, teilweise kompressible Dämmstoffe wie Glaswolle und Mineralwolle erreichen allerdings nur Werte bis maximal 0,032 W/m · K, während Hartplatten aus PIR (Polyisocyanurat) oder PUR (Polyurethan) aufbessere Werte bis zu 0,024 W/m · K kommen.

Ein großes Problem bei der Dämmung von Gebäuden ist das Auftreten von Wärmebrücken, insbesondere wenn es sich um Lücken in der Wärmdämmschicht handelt, in denen Konvektion stattfinden kann. Konvektion tritt in besonders starkem Maße auf, wenn das entsprechende Bauteil (Dach, Fassade oder dergleichen) keine Luftdichtheit bietet.

Eine Wärmedammschicht ohne Lücken läßt sich häufig durch flexible Dämmstoffe relativ gut erreichen, während dies bei starren Platten recht schwierig zu gewährleisten ist.

Die Anforderungen an die Wärmedämmung von Gebäuden steigen stetig an. Ursachen sind zum Beispiel Klimaschutzabkommen, wie das Kyoto-Protokoll, und ihre nationalen Umsetzungen, wie die deutschen Energieeinsparverordnungen, bei denen konkrete Dämmwerte für Gebäudeteile für Neubau und Sanierung vorgeschrieben werden. Für Deutschland gilt derzeit ein Wärmedurchgangskoeffizient für die Wärmedämmung von 0,30 W/m² · K für die Sanierung bestehender Dächer. Für das Jahr 2009 ist eine Verschärfung auf 0,24 W/m² · K zu erwarten.

Diese steigenden Anforderungen an die Wärmedämmung führen zu immer größeren Problemen, da sich die geforderten Wärmedämmwerte bei den vorhandenen Gebäudekonstruktionen unter Verwendung von konventionellen Dämmstoffen nicht mehr erreichen lassen. Dementsprechend sind Erhöhungen der Dämmstoffdicke und damit sehr aufwendige konstruktive Anpassungen erforderlich. Beispiele hierfür sind
- die Anpassung der Anschlüsse/Einbauhöhen von Dachfenstern,
- die Einhaltung von Brüstungshöhen im Terrassen-Flachdachbereich,
- die Anpassung der Dachüberstände bei Wärmedämmung,
- die Anpassung der Fassaden bei Reihenhäusern,
- ein größerer Tageslichteinfall bei Fenstern durch geringere Wandaufbaudicken, oder
- die Anpassung der Türen und Türrahmen bei zusätzlicher Dämmung am Boden.

Zudem geht ein nicht unerheblicher Anteil der Wohnfläche durch große Dämmstoffdicken, insbesondere bei Fassadendämmungen im Innenbereich verloren.

Eine Möglichkeit, den vorgenannten Problemen zu begegnen, besteht im Einsatz von Vakuumdämmplatten (VIP = vacuum insulated panel), die eine Wärmeleitfähigkeit von 0,004 W/m · K bis 0,010 W/m · K aufweisen. VIP-Platten bestehen aus einem porösen Kernmaterial, das unter anderem als Stützkörper für das in der Vakuumdämmplatte vorliegende Vakuum dient, und einer hochdichten Hülle, die einen Gaseintrag in die Dämmplatte verhindert. Allerdings sind VIP-Platten sehr empfindlich bei der Handhabung, der Lagerung, dem Transport und dem Einbau. Desweiteren können VIP-Platten nicht zugeschnitten werden, da das Vakuum bei einer Beschädigung der Hülle nicht erhalten bleibt.

Für den Schutz der Oberflächen von Vakuumdämmplatten sind aus dem Stand der Technik Sandwich-Konstruktionen, z. B. mit ober- und unterseitigen Lagen aus Hartschaum und/oder Dekorholz, bekannt. Von Nachteil ist hierbei, daß es sich bei den ober- und unterseitigen Lagen um starre Platten mit vorgegebener Dicke handelt. Derartige Platten lassen sich ausgesprochen schlecht verlegen und an die Verhältnisse vor Ort anpassen.

Ein weiteres Problem, das sich bei dem Vakuumdämmplatten ergibt, besteht darin, daß diese nicht durch Nägel oder Schrauben befestigt werden dürfen, da dies zu einer Beschädigung der Hülle und damit zu einer Belüftung führt. Dementsprechend müssen die VIP-Platten für den Wandeinbau aufwendig in Halterungen eingebracht werden. Noch schwieriger ist der Einsatz und Einbau dieser Platten in Dachschrägen.

Ein weiteres Problem, das sich bei den VIP-Platten ergibt, besteht darin, daß die Platten zur Dämmung üblicherweise direkt nebeneinander gelegt werden und zwischen den Platten dann ein Spalt verbleibt, worüber sich große Wärmebrücken zwischen den Paneelen ergeben.

Aus der Patentanmeldung EP 1 544 367 A2 ist ein Dämmmittel mit einer Vakuumdämmplatte gemäß dem Oberbegriff von Anspruch 1 bekannt. Aus der Patentanmeldung DE 10 2004 044410 A1 ist ein Dämmmittel mit einer Vakuumdämmplatte gemäß dem Oberbegriff von Anspruch 5 bekannt.

Aufgabe der vorliegenden Erfindung ist es nun, ein Wärmedämmittel mit wenigstens einer Vakuumdämmplatte, ein Wärmedämmsystem mit einem Dämmittel der vorgenannten Art sowie eine Gebäudehülle mit einem vorgenannten Wärmedämmsystem zur Verfügung zu stellen, wobei eine schnelle und einfache Verlegung bei guter Wärmedämmung erreicht werden soll und wobei Wärmebrücken möglichst verhindert werden sollen.

Zur Lösung der vorstehend genannten Aufgabe sind verschiedene alternative Lösungen vorgesehen, die sich allesamt mit der Ausgestaltung von Vakuumdämmplatten befassen. Die nachfolgend genannten erfindungsgemäßen Alternativen können dabei jeweils für sich oder aber auch in beliebiger Kombination miteinander Anwendung finden.

Bei einer ersten erfindungsgemäßen Alternative ist es so, daß randseitig an der Vakuumdämmplatte ein Dämmrand aus einem kompressiblen Dämmstoff vorgesehen ist und daß der Dämmrand mit dem Dämmittel und insbesondere mit dem Rand der Vakuumdämmplatte fest verbunden ist. Bevorzugt ist der Dämmrand dabei an wenigstens einer Randseite der Vakuumdämmplatte vorgesehen. Insbesondere sollte der Dämmrand aber als umlaufender Rahmen ausgebildet sein, der allseitig um die Vakuumdämmplatte herum angeordnet ist.

Bei einer alternativen Ausführung, die nicht Teil der beanspruchten Erfindung ist, ist zusätzlich vorgesehen, daß ober- und/oder unterseitig an der Vakuumdämmplatte eine Dämmschicht aus einem kompressiblen Dämmstoff vorgesehen ist und daß die Dämmschicht mit dem Dämmittel und insbesondere mit der Ober- und/oder Unterseite der Vakuumdämmplatte fest verbunden ist.

Den beiden vorgenannten erfindungsgemäßen Alternativen liegt der Grundgedanke zugrunde, eine weiche, komprimierbare Schicht, die letztlich auch eine Zusatzdämmung darstellt, an mindestens einer Fläche oder einem Flächenbereich der VIP-Platte vorzusehen. Dabei kommen grundsätzlich alle Flächen der Vakuumdämmplatte in Frage, also oben, unten und/oder randseitig.

Der Dämmrand bzw. die ober- und/oder unterseitige Dämmschicht kann dabei variabel in Größe (Länge, Breite und/oder Dicke) und Material sein. Zweckmäßigerweise sollte der Dämmrand und/oder die ober- und/oder unterseitige Dämmschicht bereits herstellerseitig mit der Vakuumdämmplatte verbunden sein, da der Dämmstoff letztlich nicht nur im eingebauten Zustand eine zusätzliche Dämmwirkung hat, sondern als außenseitiger Schutz beim Transport, der Handhabung und der Verlegung dient.

Besondere Bedeutung kommt in diesem Zusammenhang insbesondere dem kompressiblen Dämmrand zu. Der Dämmrand kann einerseits Wärmebrücken zwischen zwei zu verlegenden VIP-Platten verhindern. Durch die Kompressibilität des randseitigen Dämmstoffs können benachbarte VIP-Platten eng und abdichtend nebeneinander verlegt werden. Außerdem kann der Dämmrand zur Einspannung der Platte zwischen zwei Bauteilen, insbesondere Sparren oder Balken dienen. Desweiteren ermöglicht die Realisierung des kompressiblen Dämmstoffrandes eine gute und problemlose Anpassung an örtliche Gegebenheiten. Durch die integrierte weiche Dämmung ergibt sich in einfacher Weise ein Ausgleich von Einbautoleranzen. Da der Dämmrand Teil des Dämmittels ist, insbesondere mit der Vakuumdämmplatte fest verbunden ist, kann außerdem grundsätzlich die Befestigung der VIP-Platte über den Rand durch Vernageln oder Verschrauben erfolgen, ohne daß eine Beschädigung der Hülle der VIP-Platte befürchtet werden muß.

Die Dicke des Dämmrandes sollte zumindest im wesentlichen der Dicke der VIP-Platte entsprechen, während die Breite des Randes zwischen 1 cm und 50 cm, bevorzugt zwischen 2 cm und 20 cm und insbesondere zwischen 3 cm und 10 cm liegen kann. Je breiter der Dämmrand ist, desto leichter kann durch die Komprimierbarkeit des Dämmaterials des Dämmrandes eine Anpassung an die örtlichen Gegebenheiten erzielt werden. Im übrigen ist auch ein Zuschnitt des Dämmrandes ohne weiteres möglich. Dies gilt insbesondere dann, wenn der kompressible Dämmstoff, der auch für die ober- und/oder unterseitige Dämmschicht einsetzbar ist, aus einem Kunststoffaservlies, Mineralwölle, Glaswolle, Hanf, Wolle, PUR-Schaumband und/oder einer Luftpolsterfolie besteht. Die vorgenannten Materialien lassen sich vergleichsweise gut schneiden und bieten im übrigen eine Wärmeleitfähigkeit zwischen 0,025 und 0,060 W/m · K, vorzugsweise zwischen 0,030 und 0,050 W/m · K und insbesondere zwischen 0,032 und 0,040 W/m · K, was zur Erreichung einer guten Wärmedämmung günstig ist.

Die ober- und/oder unterseitige Dämmschicht, die aus dem gleichen Material wie der Dämmrand bestehen kann, entspricht in ihrer Länge und Breite bevorzugt den Abmessungen der Vakuumdämmplatte. Ist ein Dämmrand vorgesehen, kann dies die Abmaße des Dämmrandes mit einschließen, so daß der Dämmrand sändwichartig zwischen den Dämmschichten angeordnet ist. Im übrigen kann, je nach Dicke der Dämmschicht, diese teilweise oder auch ganz abgetrennt und zugeschnitten werden, wie dies beim Dämmrand ebenfalls der Fall ist.

In jedem Falle wird aber durch die ober- und/oder unterseitige Dämmschicht und auch den Dämmrand ein Schutz für die VIP-Platte zur Verfügung gestellt, so daß Beschädigungen besser verhindert werden können.

Bevorzugt sollte die Komprimierbarkeit des Dämmaterials des Dämmrandes und/oder der ober- und/oder unterseitigen Dämmschicht größer 25% und insbesondere bevorzugt größer 50% sein. Hierdurch kann eine große Anpassung des Dämmittels an die jeweiligen Einbauverhältnisse erzielt werden.

Bei einer weiteren erfindungsgemäßen Alternative ist randseitig an der Vakuumdämmplatte ein überstehender flacher, folienartiger Randstreifen vorgesehen. Dabei entspricht der Überstand des Randstreifens der Dicke der Vakuumdämmplatte zuzüglich wenigstens 5 cm. Bevorzugt ist der Überstand allerdings noch um einiges größer. Der Überstand sollte der Dicke der Vakuumplatte insbesondere zuzüglich mehr als 10 cm sein. Bei einer besonders bevorzugten Ausführungsform liegt der Überstand zwischen der Summe aus der Dicke der VIP-Platte zuzüglich 10 cm einerseits und der Summe aus der Dicke der VIP-Platte, der durchschnittlichen Sparrenhöhe und der durchschnittlichen Sparrenbreite zuzüglich 10 cm andererseits.

Der überstehende flache Randstreifen, dessen Dicke um ein Vielfaches geringer ist als die Dicke der VIP-Platte, bietet verschiedene wesentliche Vorteile. Zum einen erleichtert der Randstreifen die außenseitige Befestigung der VIP-Platte am Untergrund und/oder an benachbarten Sparren. Letztlich kann das Dämmittel über den Randstreifen auf gewohnte Weise durch Klammern, Nägel oder Schrauben befestigt werden.

Darüber hinaus kann vorgesehen sein, daß am Randstreifen ein integrierter Klebestreifen vorgesehen ist, so daß das Dämmittel an einem Bauteil, an einem anderen Dämmittel oder den Untergrund angeklebt werden kann. Hierdurch läßt sich eine schnelle und lagesichere Anordnung des erfindungsgemäßen Dämmittels erzielen.

Darüber hinaus sollte der Randstreifen luftdicht und/oder dampfdicht sein. Für einen funktionierenden Aufbau des Wärmedämmsystems ist es letztlich notwendig, eine Luft- oder Dampfdichtheitsschicht herzustellen, damit eine Konvektion und damit der Eintrag feuchter Luft in die Konstruktion verhindert wird. Für bestimmte Einbausituationen ist allerdings auch eine diffusionsoffene Variante möglich oder eine Variante, die ihren sd-Wert feuchtevariabel ändert.

Der abstehende Randstreifen kann dabei von der Hülle der Vakuumdämmplatte, das heißt einem überstehenden vergrößerten Hüllenrand, wenigstens einem angefügten, randseitig vorgesehenen Folienstreifen oder einer unter- und/oder oberseitig an die Vakuumdämmplatte angefügten Folie gebildet sein.

Dabei ist es bevorzugt, daß der Randstreifen möglichst als umlaufender Rahmen oder Rand ausgebildet ist, so daß es nicht nur möglich ist, das Dämmittel randseitig an jeder Stelle zu befestigen, sondern auch, daß gleichzeitig durch das Verbinden von überstehenden Randstreifen benachbarter Dämmittel eine hinreichende Dichtigkeit zwischen zwei benachbarten Dämmitteln erreicht werden kann.

Damit eine Verklebung des Randstreifens an jeder Stelle möglich ist, ist es im übrigen besonders günstig, wenn der Randstreifen umlaufend mit einem Klebestreifen ausgestattet ist. Dabei kann der Klebestreifen aus z. B. Hotmelt, Dispersions-Acrylaten oder Butylkautschuk mit Liner bestehen. Natürlich können auch andere Klebstoffe vorgesehen sein.

Die Dicke des Randstreifens kann zwischen 10 und 1000 µm, bevorzugt zwischen 30 und 500 µm und weiter bevorzugt zwischen 50 und 200 µm liegen.

Der sd-Wert des Randstreifens (nicht feuchtevariabel) sollte größer 1 m, bevorzugt größer 2 m, und insbesondere größer 100 m sein. Der sd-Wert kann aber auch feuchtevariabel sein, z. B. kleiner 1 m bei einer relativen Feuchte von mehr 85% oder er kann zwischen 1 m bis 1,9 m bei einer relativen Feuchte von 40% liegen. Der sd-Wert einer diffusionsoffenen Ausführung sollte kleiner 1 m sein.

Im übrigen kann im Bereich des Randstreifens auch eine oder mehrere Abtrennhilfen in Form z. B. von Perforationslinien vorgesehen sein, um den Randstreifen bedarfsweise ganz oder teilweise abzutrennen, sofern dies bei der Verlegung erforderlich ist. Es versteht sich, daß der Randstreifen natürlich auch bedarfsweise abgeschnitten werden kann. Letztlich geben die Abtrennhilfen lediglich definierte Trennstellen bzw. -linien vor.

Die Vakuumdämmplatte kann außerdem beschichtet oder umhüllt sein, so daß eine robuste Oberfläche entsteht, die außerdem UV-geschützt. Dabei kann auf die Hülle der Vakuumdämmplatte beispielsweise eine Holzplatte, eine Kunststoffplatte oder eine Vliesschicht aufgebracht sein. Auch andere Schicht- bzw. Deckmaterialien sind ohne weiteres möglich.

Weiterhin sollte darauf geachtet werden, daß die Vakuumdämmplatte sich durch eine Langzeittauglichkeit auszeichnet. Ein akzeptabler Druckanstieg liegt zwischen 0,5 bis 3 mbar pro Jahr.

Eine qualitativ hochwertige und damit langzeittaugliche Fügenaht ist außerdem notwendig. Die Fügenaht sollte keine sichtbaren Falten zeigen und eine Mindestbreite von 7 bis 12 mm aufweisen.

Bei einer weiteren alternativen Ausführungsform der vorliegenden Erfindung ist vorgesehen, daß wenigstens zwei lamellenartig ausgebildete, voneinander beabstandete und miteinander verbundene Vakuumdämmplatten vorgesehen sind oder daß die Vakuumdämmplatte wenigstens zwei voneinander beabstandete, lamellenförmige Plattenelemente aufweist. Der Unterschied beider Ausführungsformen besteht darin, daß bei der ersten Alternative jede Vakuumdämmplatte für sich abgeschlossen unter Vakuum steht, also von einer eigenen Hülle umgeben ist, während bei der zweiten Alternativ die Plattenelemente als Kerne in einer gemeinsamen Hülle angeordnet sind. Dabei kann zwischen den miteinander verbundenen Vakuumdämmplatten oder den Plattenelementen jeweils wenigstens ein Streifen aus kompressiblem Dämmstoff vorgesehen sein. Beide Ausführungsformen bieten zunächst einmal den Vorteil, daß sich durch die lamellenartige Ausbildung letztlich ein flexibles, roll- oder faltbares Dämmittel ergibt, was nicht nur einfach zu handhaben, sondern auch leichter zu verlegen ist als eine starre Platte. Dabei bietet gerade die Ausführungsform, bei der eine Mehrzahl von separaten Vakuumdämmplatten vorgesehen sind, den Vorteil, daß das Dämmittel um einzelne Lamellen gekürzt werden kann, sofern dies die jeweilige Einbausituation erfordert. Das Aufschneiden eines solchen, aus zwei Lamellen bestehenden Elements führt letztlich nicht dazu, daß eine Vakuumdämmplatte als solche belüftet wird. Desweiteren führte eine Beschädigung einer Vakuumdämmplatte nicht dazu, daß das Dämmittel insgesamt unbrauchbar ist.

Im übrigen bezieht sich die vorliegende Erfindung auch auf ein Wärmedämmsystem für eine Gebäudehülle eines Gebäudes und damit auch für ein Gebäude mit Wenigstens einem Dämmittel der vorgenannten Art. Das Wärmedämmsystem kann beispielsweise im Dach-, Wand-, Boden- und/oder Deckenbereich eines Gebäudes vorgesehen sein.

Bei einer bevorzugten Ausführungsform des erfindungsgemäßen Wärmedämmsystems ist ein Bausatz mit wenigstens zwei Vakuumdämmplatten unterschiedlicher Größe vorgesehen. Bei dem Bausatz handelt es sich letztlich um eine eigenständige verkaufsfähige Einheit bzw. einen Set, der in einer gemeinsamen Verpackung die Mehrzahl von unterschiedlich großen Vakuumdämmplatten aufweist.

Es ist festgestellt worden, daß es vorteilhaft ist, wenn ein Set mit einer Mehrzahl von Vakuumdämmplatten mit aufeinander abgestimmten uriterschiedlichen Plattengrößen verwendet wird. Die Abstimmung der Größen der unterschiedlichen Platten ist derart gewählt, daß sich bei Sparrenabständen zwischen 30 bis 100 cm beispielsweise bei einem 3er Set ein Belegungsgrad von größer 40%, bevorzugt zwischen 50 bis 90%, weiter bevorzugt zwischen 55 bis 80% und insbesondere zwischen 60 bis 70% erreicht wird. So bietet sich beispielsweise ein Bausatz bzw. Set mit drei rechteckigen Platten in den Plattengrößen 30 x 40 cm, 50 x 60 cm und 70 x 80 cm an, mit dem die üblichen Sparrenabstände zwischen 30 cm und 100 cm mit einem guten Belegungsgrad versehen werden können. Weiterhin vorteilhaft haben sich Maße herausgestellt, die an DIN-A-Größen angelehnt sind, z. B. ein Set aus drei Platten mit den Größen DIN-A4, DIN-A2,5 und DIN-A1. Bevorzugt können auch Platten eingesetzt werden, deren Seitenverhältnisse dem goldenen Schnitt gehorchen, also sich wie 1,618 zu 1 verhalten. Diese erlaubten in besonders effizienter Weise, den gewünschten hohen Belegungsgrad zu erhalten.

Eingangs ist darauf hingewiesen worden, daß die vorgenannten erfindungsgemäßen Alternativen nicht nur für sich, sondern auch in beliebiger Kombination miteinander realisiert werden können. So ist es beispielsweise möglich, einen Set oder Bausatz mit wenigstens zwei Dämmitteln der vorgenannten Art vorzusehen, wobei die einzelnen Dämmittel einen umlaufenden Dämmrand, ober- und unterseitige Dämmschichten sowie einen über den Dämmrand überstehenden flachen umlaufenden Randstreifen aufweisen kann. Darüber hinaus kann jedes Dämmittel in der zuvor beschriebenen Art und Weise lamellenartig ausgebildet sein.

Im übrigen betrifft die vorliegende Erfindung nicht nur ein Dämmittel der vorgenannten Art sowie ein Wärmedämmsystem mit wenigstens einem zuvor beschriebenen Dämmittel, sondern auch eine Gebäudehülle bzw. ein Gebäude, an der bzw. dem außen- und/oder innenseitig ein Wärmedämmsystem der vorgenannten Art vorgesehen ist. Letztlich läßt sich an einer solchen Gebäudehülle bzw. einem mit dieser Gebäudehülle versehenen Gebäude beispielsweise eine Sanierung eines Dachs mit vorgegebener Dachkonstruktion und vorgegebenen Sparrenhöhen durchführen, wobei eine Wärmedämmung von 0,24 W/m² · K ohne weiteres erreichbar ist, ohne die Aufbauhöhe zu verändern. Darüber hinaus lassen sich durch die Erfindung Wärmedämmaßnahmen nicht nur im Dach-, sondern auch im Außenfassadenbereich sowie im Innenbereich eines Gebäudes realisieren, wobei sehr gute Wärmedämmwerte möglich sind, ohne daß aufwendige konstruktive Änderungen erforderlich sind.

Nachfolgend werden Ausführungsbeispiele der Erfindung anhand der Zeichnung beschrieben. Dabei bilden alle beschriebenen und/oder bildlich dargstellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung einer ersten Ausführungsform eines erfindungsgemäßen Dämmittels,
- Fig. 2: eine Draufsicht auf das Dämmittel aus Fig. 1,
- Fig. 3: eine schematische Ansicht einer zweiten Ausführungsform eines erfindungsgemäßen Dämmittels,
- Fig. 4: eine schematische Darstellung einer dritten Ausführungsform eines erfindungsgemäßen Dämmittels,
- Fig. 5: eine schematische Darstellung einer vierten Ausführungsform eines erfindungsgemäßen Dämmittels,
- Fig. 6: eine schematische Darstellung einer fünften Ausführungsform eines erfindungsgemäßen Dämmittels,
- Fig. 7: eine schematische Darstellung einer sechsten Ausführungsform eines erfindungsgemäßen Dämmittels,
- Fig. 8: eine Draufsicht auf das Dämmittel aus Fig. 7,
- Fig. 9: eine schematische Darstellung einer siebten Ausführungsform eines erfindungsgemäßen Dämmmittels,
- Fig. 10: eine schematische Darstellung einer achten Ausführungsform eines erfindungsgemäßen Dämmittels,
- Fig. 11: eine schematische Darstellung einer neunten Ausführungsform eines erfindungsgemäßen Dämmittels,
- Fig. 12: eine schematische Darstellung einer zehnten Ausführungsform eines erfindungsgemäßen Dämmittels,
- Fig. 13: eine Draufsicht auf eine elfte Ausführungsform eines erfindungsgemäßen Dämmittels,
- Fig. 14: eine schematische Seitenansicht einer zwölften Ausführungsform eines erfindungsgemäßen Dämmittels,
- Fig. 15: eine schematische Darstellung eines Bausatzes eines erfindungsgemäßen Wärmedämmsystems,
- Fig. 16: eine schematische Darstellung einer Mehrzahl verlegter Dämmittel eines erfindungsgemäßen Wärmedämmsystems,
- Fig. 17: eine Draufsicht auf ein Wärmedämmsystem an einem Dachaufbau,
- Fig. 18: eine schematische Seitenansicht eines Dämmaufbaus unter Einsatz von erfindungsgemäßen Dämmitteln bei einem Dachaufbau,
- Fig. 19: eine schematische Darstellung einer Bodendämmung unter Einsatz eines erfindungsgemäßen Wärmedämmsystems und
- Fig. 20: eine schematische Darstellung eines Wandaufbaus bei einer Innendämmung unter Einsatz des erfindungsgemäßen Wärmedämmsystems.

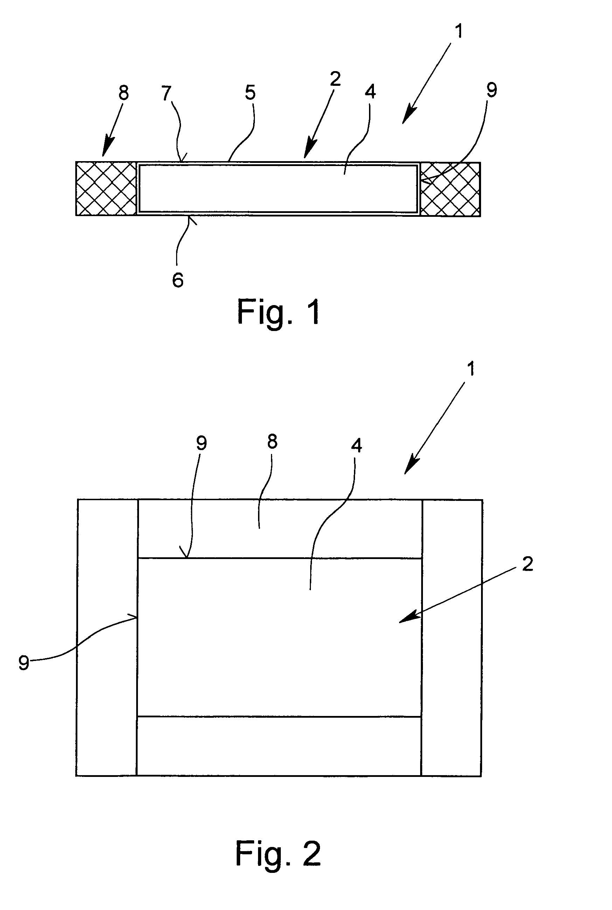

In Fig. 1 ist ein Dämmittel 1 dargestellt. Das Dämmittel 1 weist vorliegend eine Vakuumdämmplatte 2 auf. Das Dämmittel 1 selbst ist zur Herstellung eines Wärmedämmsystems 3 vorgesehen, auf das nachfolgend noch weiter eingegangen wird. Die Vakuumdämmplatte 2 als solche weist einen Kern 4 als Stützkörper und eine hochdichte Hülle 5 auf. Die Vakuumdämmplatte 2 ist evakuiert, so daß die Hülle 5 eng am Kern 4 anliegt.

Eine Vakuumdämmplatte 2, wie sie beispielsweise in Fig. 1 aber auch den anderen Figuren dargestellt ist, kann grundsätzlich eine Wärmeleitfähigkeit zwischen 0,002 bis 0,012 W/m · K, bevorzugt 0,004 bis 0,010 W/m · K und insbesondere zwischen 0,006 bis 0,009 W/m · K aufweisen. Die Dicke der Vakuumdämmplatte 2 von der Unterseite 6 bis zur Oberseite 7 liegt zwischen 0,5 bis 10 cm, bevorzugt zwischen 1,5 bis 6 cm und insbesondere zwischen 2 bis 5 cm. Die Seitenabmaße, also Länge und Breite der Vakuumdämmplatte 2, liegen zwischen 0,1 bis 3 m, bevorzugt 0,3 bis 1,5 m, besonders bevorzugt zwischen 0,5 und 1 m und insbesondere zwischen 0,6 und 0,8 m. Dabei versteht es sich, daß alle Einzelwerte und Zwischenintervalle innerhalb der vorgenannten Intervalle möglich und als erfindungswesentlich anzusehen sind, auch wenn die betreffenden Einzelwerte und Zwischenintervalle im einzelnen nicht genannt sind. Dies gilt für alle dargestellten und beschriebenen Ausführungsformen.

Der Vollständigkeit halber darf darauf hingewiesen werden, daß die Vakuumdämmplatte 2 vorliegend eine Rechteckform aufweist. Dies ist jedoch nicht unbedingt erforderlich. Grundsätzlich kann die Vakuumdämmplatte alle beliebigen Formen aufweisen.

Bei der in Fig. 1 dargestellten Ausführungsform ist es nun so, daß randseitig an die Vakuumdämmplatte 2 angrenzend ein Dämmrand 8 aus einem kompressiblen Dämmstoff vorgesehen ist, wobei der Dämmrand 8 mit dem Dämmittel 1 verbunden ist. Konkret ist es dabei so, daß der Dämmrand 8 an die Randseite 9 der Vakuumdämmplatte 2 angrenzt und mit der Randseite 9 fest verbunden, beispielsweise verklebt ist.

In Fig. 2 ist dargestellt, daß der Dämmrand 8 in Art eines umlaufenden Rahmens ausgebildet ist, der die Vakuumdämmplatte 2 allseitig umgibt. Der Dämmrand 8 kann einstückig oder aus einer Mehrzahl von Schenkeln hergestellt werden. Hinzuweisen ist darauf, daß es grundsätzlich auch möglich ist, statt eines umlaufenden Rahmens auch nur einen, zwei oder drei Randschenkel vorzusehen, die nur auf einer, auf zwei oder auf drei Seiten vorgesehen sein können. Die einzelnen Schenkel sind vorliegend gleich breit, können aber auch eine unterschiedliche Breite aufweisen.

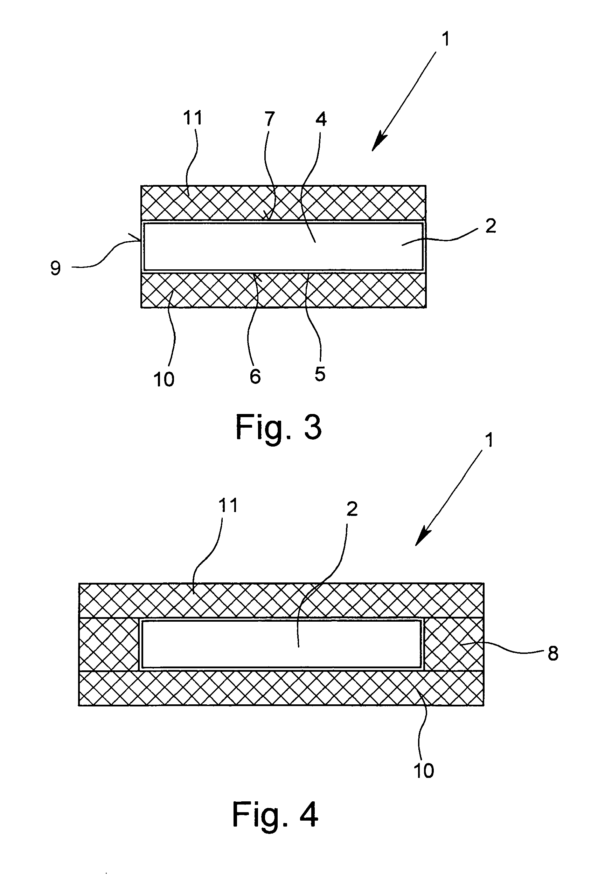

Bei der in Fig. 3 dargestellten Ausführungsform ist ober- und unterseitig an der Vakuumdämmplatte 2 jeweils eine Dämmschicht 10, 11 aus einem kompressiblen Dämmstoff vorgesehen. Die Dämmschicht 10 ist dabei mit der Unterseite 6 verbunden, während die Dämmschicht 11 mit der Oberseite 7 der Vakuumdämmplatte 2 fest verbunden, insbesondere verklebt ist.

Der Dämmrand 8 und die Dämmschichten 10, 11 können grundsätzlich aus demselben kompressiblen Dämmstoff bestehen. Dies muß jedoch nicht der Fall sein. Grundsätzlich können alle drei Bauteile aus unterschiedlichen kompressiblen Dämmstoffen bestehen. Der kompressible Dämmstoff, dessen Komprimierbarkeit bevorzugt größer 50% beträgt, kann aus einem oder einer Auswahl von Materialien aus einem Kunststoffvlies, Mineralwolle, Glaswolle, Hanf, Wolle, PUR-Schaumstoffband oder einer Luftpolsterfolie bestehen. In jedem Falle sollte der Dämmstoff aber so ausgebildet sein, daß seine Wärmeleitfähigkeit zwischen 0,032 bis 0,040 W/m · K liegt.

Bezüglich Fig. 3 ist im übrigen noch darauf hinzuweisen, daß die Dicke der Dämmschichten 10, 11 variieren kann. Die Dicke der Dämmschichten 10, 11 kann kleiner, gleich oder aber größer als die Dicke der Vakuumdämmplatte 2 sein. Auch kann die Dicke der Dämmschichten 10, 11 untereinander unterschiedlich sein. Dem gegenüber entspricht die Dicke des Dämmrandes 8 vorzugsweise der Dicke der Vakuumdämmplatte 2. Die Breite des Dämmrandes 8 liegt bevorzugt im Intervall zwischen 3 bis 10 cm.

In Fig. 4 ist eine Ausführungsform eines Dämmittels 1 dargestellt, das sowohl einen umlaufenden Dämmrand 8 als auch eine unterseitige Dämmschicht 10 und eine oberseitige Dämmschicht 11 aufweist. Während die Flächenabmaße der Dämmschichten 10, 11 bei der Ausführungsform gemäß Fig. 3 den Flächenabmaßen der Vakuumdämmplatte 2 entsprechen, ist es bei der Ausführungsform gemäß Fig. 4 so, daß die Flächenabmaße der Dämmschichten 10, 11 den Flächenabmaßen der Vakuumdämmplatte 2 einschließlich des Dämmrandes 8 entsprechen, so daß die Vakuumdämmplatte 2 einschließlich des umlaufenden Dämmrandes 8 zwischen den Dämmschichten 10, 11 aufgenommen ist.

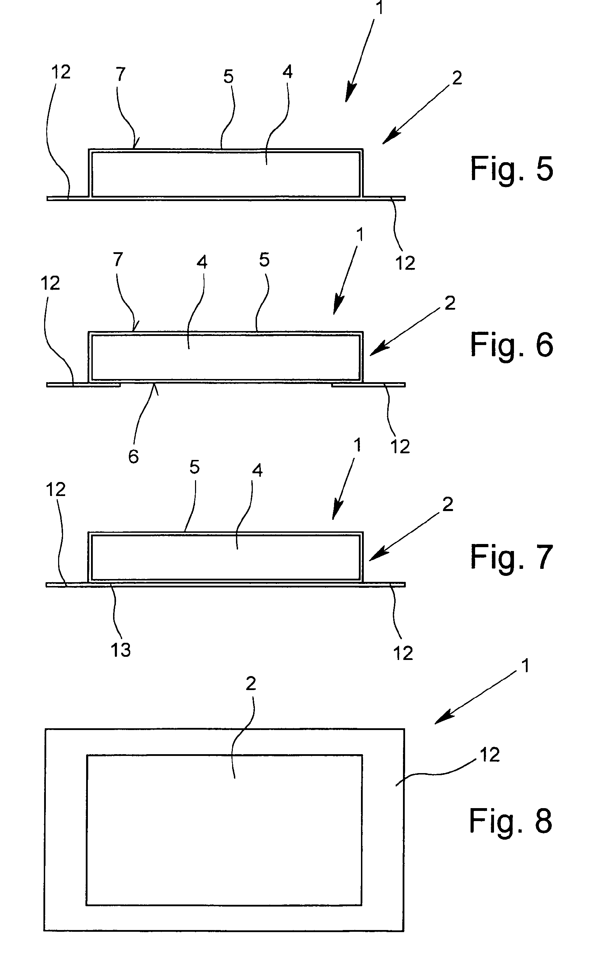

Bei den in den Fig. 5 bis 10 dargestellten Ausführungsformen ist es jeweils so, daß randseitig an der Vakuumdämmplatte 2 ein überstehender, flacher Randstreifen 12 vorgesehen ist, dessen Dicke um ein Mehrfaches geringer ist als die Dicke der Vakuumdämmplatte 2. Grundsätzlich sollte die Dicke des Randstreifens 12 zwischen 50 bis 200 µm liegen, wobei jeder Einzelwert in dem vorgenannten Intervall möglich ist. Der Überstand des Randstreifens 12 bzw. dessen Breite sollte etwa wie folgt sein (mit d = Dicke der Vakuumdämmplatte 2, h = Höhe eines Sparrens, b = Breite eines Sparrens): größer (5 cm + d), bevorzugt größer (10 cm + d) und insbesondere im Intervall zwischen (10 cm +d) bis (10 cm + d + h + b).

Bei der in Fig. 5 dargestellten Ausführungsform wird der überstehende Randstreifen 12 von der Hülle 5 der Vakuumdämmplatte 2 gebildet. Dies kann bei der Herstellung des Dämmittels 2 berücksichtigt werden, so daß sich ein entsprechend großer bzw. breiter Randstreifen 12 ergibt.

Bei der in Fig. 6 dargestellten Ausführungsform ist wenigstens ein angefügter Folienstreifen als Randstreifen 12 vorgesehen. Im dargestellten Ausführungsbeispiel sind auf gegenüberliegenden Seiten jeweils Randstreifen 12 angefügt. Vorliegend sind die Randstreifen mit der Unterseite 6 verbunden. Es versteht sich, daß auch eine Verbindung mit der Oberseite 7 oder aber der Randseite 9 möglich ist.

Bei der Ausführungsform gemäß Fig. 7 ist an die Unterseite 6 der Vakuumdämmplatte 2 vollflächig eine Folie 13 angefügt, die durch ihre überstehenden Ränder die Randstreifen 12 bildet. Die Draufsicht gemäß Fig. 8 verdeutlicht dabei, daß der Randstreifen 12 als umlaufender Rand oder Rahmen ausgebildet ist. Dies muß jedoch nicht der Fall sein. Außerdem kann der Randstreifen auch nur an einer, zwei oder drei Randseiten 9 der Vakuumdämmplatte 2 vorgesehen sein.

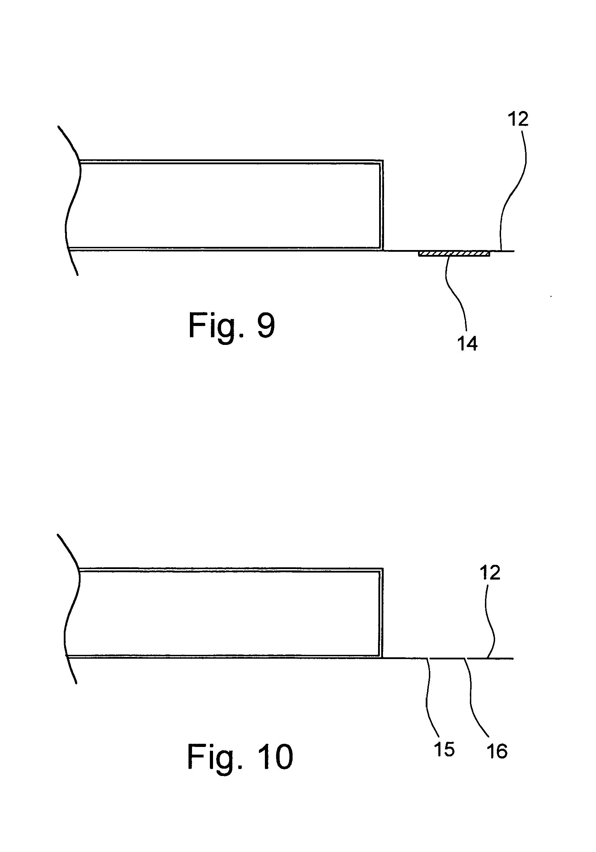

Die Fig. 9 und 10 zeigen Möglichkeiten, die bei den vorgenannten Ausführungsformen kumulativ oder auch für sich vorgesehen sein können. Aus der Fig. 9 ergibt sich, daß am Randstreifen 12 ein Klebestreifen 14 vorgesehen ist. Der Klebestreifen 14, der vorliegend an der Unterseite des Randstreifens 12 vorgesehen ist, grundsätzlich aber auch an dessen Oberseite oder an beiden Seiten vorgesehen sein kann, ist so ausgebildet, daß eine Verklebung mit einem Untergrund oder aber einem Randstreifen eines weiteren Dämmittels 1 möglich ist. Bevorzugt erstreckt sich der Klebestreifen 14 über die gesamte Länge des Randstreifens 12.

Die Fig. 10 verdeutlicht, daß am Randstreifen 12 Abtrennhilfen 15, 16 vorgesehen sein können. Bei der Abtrennhilfe 15 handelt es sich nicht nur um einen einzelnen Punkt, sondern um eine Abtrennlinie. Gleiches gilt für die Abtrennhilfe 16. Über die Abtrennhilfen 15 oder 16 kann der Randstreifen 12 eingekürzt werden. Es versteht sich, daß neben den Abtrennhilfen 15 und 16 auch weitere Abtrennhilfen nebeneinander oder quer zueinander angeordnet möglich sind.

Im übrigen besteht der Randstreifen 12 aus einem luft- oder dampfdichten Material, so daß bei entsprechender Verklebung mit dem Untergrund durch den Randstreifen 12 hindurch keine Konvektion auftreten kann. Eine Variante mit diffusionsoffenen Eigenschaften ist ebenso möglich wie ein Randstreifen 12 mit feuchtevariablen Diffusionseigenschaften.

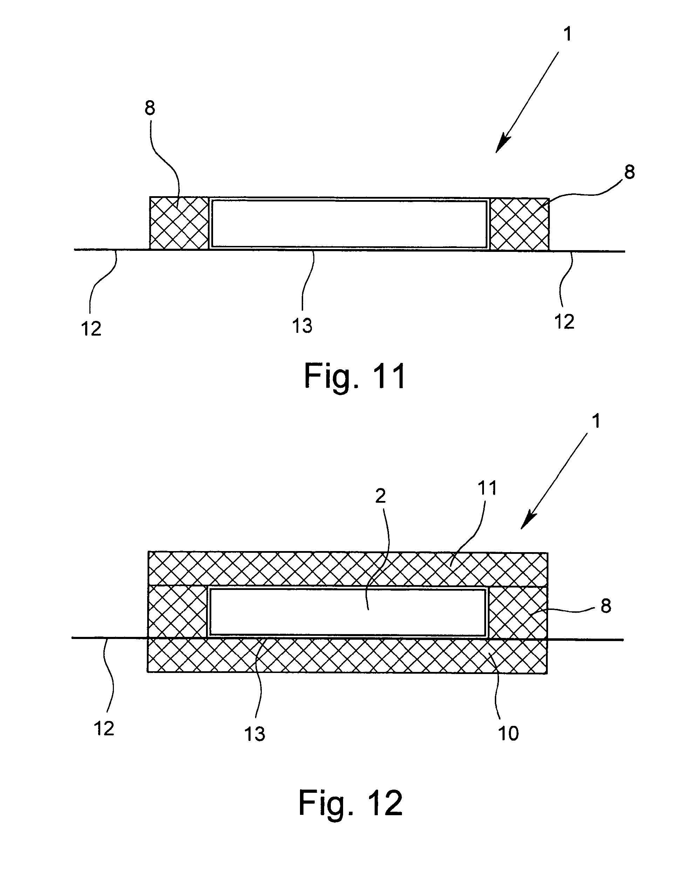

In Fig. 11 ist eine Ausführungsform eines Dämmittels 1 dargestellt, das im wesentlichen der Ausführungsform gemäß Fig. 1 entspricht, wobei jedoch unterseitig eine Folie 13 vorgesehen ist, so daß sich ein umlaufender Randstreifen 12 ergibt. Die Randseite 9 der Vakuumdämmplatte 2 ist von einem Dämmrand 8 umgeben. Der Dämmrand 8 kann bei dieser Variante als umlaufender Rahmen vorliegen. Ebenso ist es möglich, nur einen, zwei oder drei Randschenkel vorzusehen.

Die in Fig. 12 dargestellte Ausführungsform eines Dämmittels 1 entspricht im wesentlichen der in Fig. 4 dargestellten Ausführungsform, wobei ergänzend eine Folie 13 vorgesehen ist. Die Folie 13 befindet sich an der Unterseite 6 der Vakuumdämmplatte 2, wobei darauf hinzuweisen ist, daß es grundsätzlich auch möglich ist, die Folie 13 außenseitig an einer der Dämmschichten 10, 11 vorzusehen.

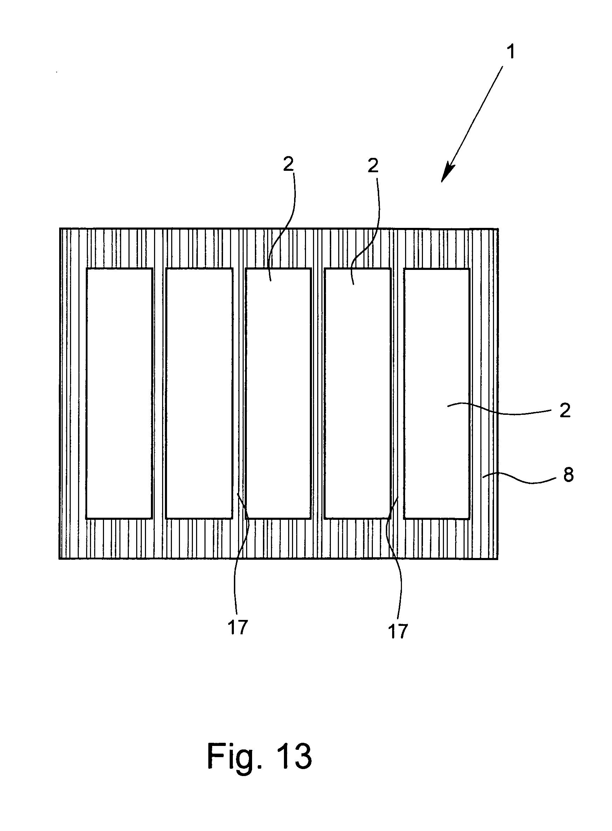

Fig. 13 zeigt eine Ausführungsform eines Dämmittels 1, bei dem fünf Vakuumdämmplatten 2 vorgesehen sind. Es versteht sich, daß die Anzahl der Vakuumdämmplatten 2 auch größer oder kleiner sein kann. Die einzelnen Vakuumdämmplatten 2 sind lamellenartig ausgebildet, wobei die einzelnen Platten 2 parallel nebeneinander mit geringem Abstand angeordnet sind. Um das Paket aus den Vakuumdämmplatten 2 herum ist ein äußerer Dämmrand 8 angeordnet. Im übrigen befindet sich zwischen benachbarten Vakuumdämmplatten 2 ein Dämmstreifen 17. Letztlich ist jede Vakuumdämmplatte 2 in der Ebene in Dämmaterial gebettet. Diese Ausführungsform zeichnet sich dadurch aus, daß sich letztlich ein flexibles, roll- bis faltbares Dämmittel 1 ergibt, das bedarfsweise um einzelne Vakuumdämmplatten 2 eingekürzt werden kann, sofern dies die jeweilige Einbausituation erfordert.

Bei der Ausführungsform gemäß Fig. 13 ist weder unter- noch oberseitig eine Folie 13 vorgesehen. Es versteht sich jedoch, daß eine solche Folie vorgesehen sein kann, die dann im übrigen einen Randstreifen 12 bilden kann.

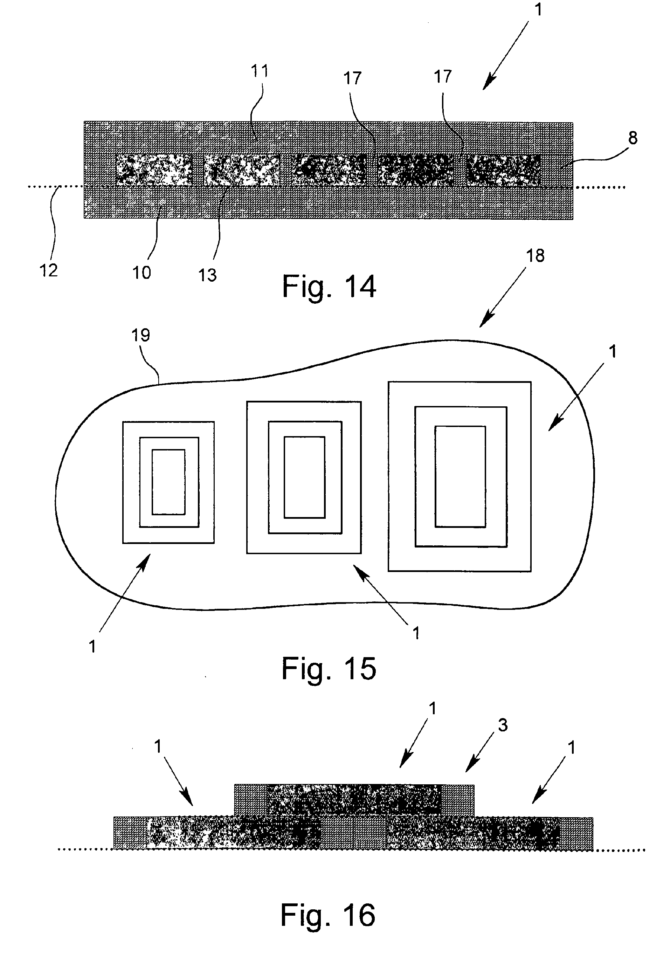

In Fig. 14 ist eine Ausführungsform dargestellt, die der Ausführungsform gemäß Fig. 13 ähnelt. Wie in Fig. 13 sind fünf lamellenförmige Vakuumdämmplatten 2 vorgesehen, die voneinander durch Dämmstreifen 17 getrennt sind. Umlaufend ist ein Dämmrand 8 vorgesehen. Unterseitig der Vakuumdämmplatten 2 ist eine Folie 13 vorgesehen, die einen umlaufenden Randstreifen 12 bildet. Außenseitig befindet sich über und unter den Vakuumdämmplatten 2 jeweils eine Dämmschicht 10, 11.

Während bei den Ausführungsformen der Fig. 13 und 14 die einzelnen lamellenförmigen Vakuumdämmplatten 2 für sich jeweils von einer separaten Hülle umgeben sind, versteht es sich, daß es grundsätzlich auch möglich ist, zwischen einer Mehrzahl von lamellenförmigen Kernen die Dämmstreifen 17 vorzusehen und von einer gemeinsamen Hülle 5 zu umhüllen. Diese Ausführungsform ist jedoch nicht dargestellt.

Die Fig. 15 verdeutlicht schematisch in einer sehr einfachen Ausführungsform ein Wärmedämmsystem 3 mit seinen Grundkomponenten in Form eines Bausatzes 18. Bei den Grundkomponenten handelt es sich vorliegend um drei Dämmittel 1 der zuvor beschriebenen Art. Diese sind in einer schematisch angedeuteten Verpackung 19 angeordnet. Der Bausatz 18, der wenigstens zwei, aber auch mehr als drei Dämmittel 1 aufweisen kann, zeichnet sich dadurch aus, daß die einzelnen Dämmittel 1 eine unterschiedliche Größe bezüglich ihrer Flächenabmaße aufweisen. Die Dicke der einzelnen Dämmittel 1 ist zumindest im wesentlichen gleich. Die Größe der vorzugsweise rechtwinkeligen Dämmittel 1 ist so gewählt bzw. aufeinander abgestimmt, daß alle Sparrenabstände zwischen 30 cm und 100 cm mit einem Belegungsgrad von vorzugsweise 60 bis 80% abgedeckt werden können.

In Fig. 16 ist eine Verlegesituation des Wärmedämmsystems 3 mit drei, vorliegend gleichgroßen Dämmitteln 1 dargestellt. Dabei sind zwei Dämmittel 1 nebeneinander angeordnet, während ein Dämmmittel 1 versetzt über den beiden anderen Dämmitteln 1 angeordnet ist. Wenngleich dies im einzelnen nicht erkennbar ist, ist das obere Dämmittel 1 über seinen Randstreifen 12 mit den darunter liegenden Dämmitteln 1 über entsprechende Klebestreifen 14 verklebt. Auch die unteren Dämmittel 1 können mit dem Untergrund über ihre Randstreifen 12 verklebt sein.

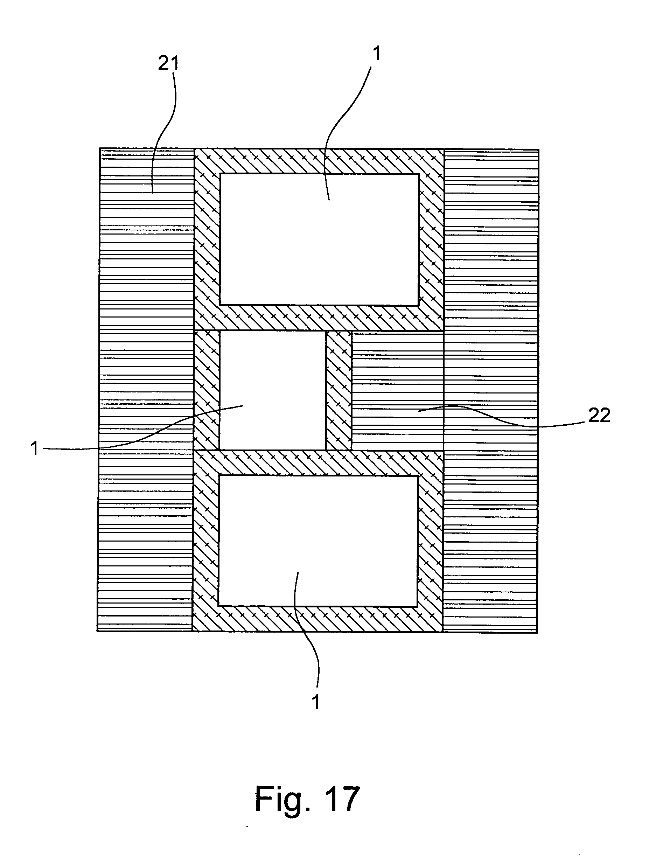

Fig. 17 zeigt einen Teil einer Gebäudehülle 20 eines im einzelnen nicht dargestellten Gebäudes. Bei dem Teil der Gebäudehülle 20 handelt es sich um einen Teil eines Dachaufbaus. Dargestellt sind zwei parallel verlaufende Sparren 21, wobei in den Zwischenraum zwischen den Sparren 21 ein Kehlbalken 22 hineinragt. Im Bereich des Kehlbalkens 22 wird ein kleineres Dämmittel 1 verwendet, während in dem Bereich außerhalb des Kehlbalkens 22 zwei gleichgroße Dämmittel 1 verwendet werden. Nicht erkennbar ist, daß die Dämmittel 1, die sich außerhalb des Bereichs des Kehlbalkens 22 befinden, nicht in der gleichen Ebene liegen wie das Dämmittel 1 im Bereich des Kehlbalkens 22. Es liegt also eine Überlappung in diesem Bereich vor.

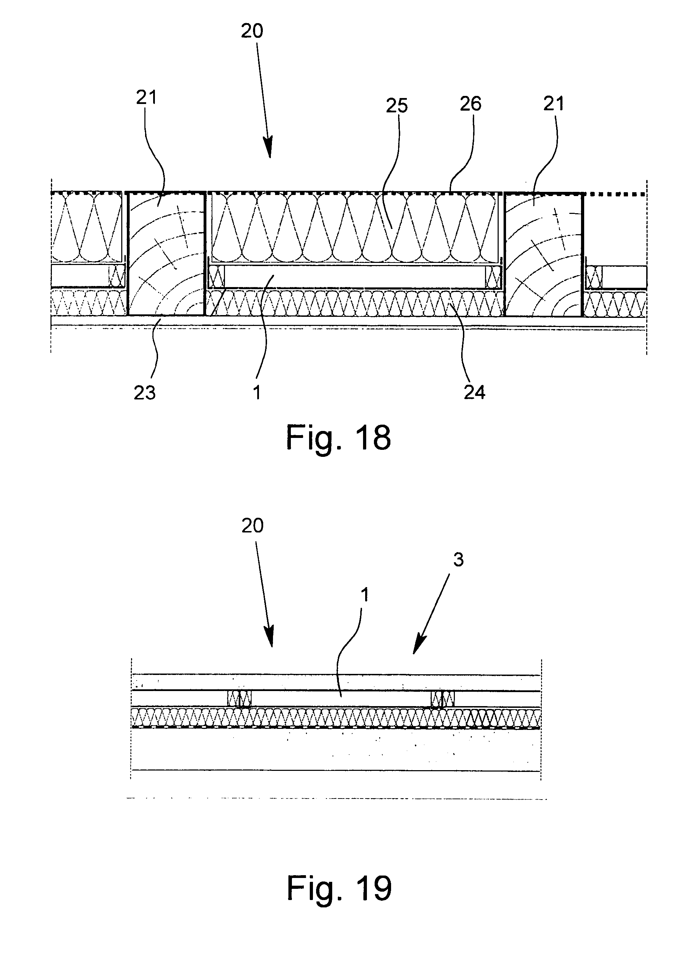

In Fig. 18 ist ein Ausschnitt einer Gebäudehülle 20 beispielhaft gezeigt. Der gesamte Aufbau weist vorliegend eine HWL-Platte 23 auf, die an den Sparren 21 befestigt ist. Desweiteren ist ein Dämmittel 1 entsprechend Fig. 11 vorgesehen. Über die Randstreifen 12 ist das Dämmittel 1 mit den Sparren 21 verklebt, wobei der kompressible Dämmrand 8 für eine Verspannung sorgt. Oberhalb und unterhalb des Dämmittels 1 befindet sich jeweils eine Lage 24, 25 mit Dämmstoff, vorliegend aus Mineralwolle. Hierbei handelt es sich jedoch um separate Lagen, die vorgesehen sein können, jedoch nicht vorgesehen sein müssen. Eine unmittelbare Verbindung der Lagen 24, 25 mit dem Dämmittel 1 ist nicht vorgesehen. Die Lagen 24, 25 haben eine Wärmeleitfähigkeit von 0,035 W/m · K, während die Vakuumdämmplatte 2 eine Wärmeleitfähigkeit von 0,008 W/m · K aufweist. Außenseitig, das heißt über der Lage 25, befindet sich eine Unterspannbahn 26. Es versteht sich, daß die Fig. 18 nur einen beispielhaften Aufbau zeigt. Bis auf das Dämmittel 1 können die anderen Elemente auch wegfallen oder durch Austauschmittel ersetzt sein.

Die Sparren haben bei einer Sparrenhöhe von 0,12 m und einer Sparrenbreite von 0,1 m eine Wärmeleitfähigkeit von 0,13 W/m · K. Der lichte Sparrenabstand beträgt 0,75 m. Grundsätzlich sollte die Sparrenhöhe zwischen 0,06 bis 0,20 m, bevorzugt 0,10 bis 0,16 m und insbesondere 0,12 bis 0,14 m liegen. Der Sparrenanteil, das heißt die von den Sparren eingenommene Fläche sollte zwischen 5 bis 20%, bevorzugt zwischen 8 bis 16% und insbesondere zwischen 10 und 14% liegen.

Die Dicke des Dämmittels 1 beträgt 0,02 bis 0,05 m. Die Dicke der Lage 25 beträgt etwa 0,02 bis 0,12 m, während die Dicke der Lage 24 etwa 0,02 bis 0,05 m beträgt.

Bei dem gewählten Aufbau wird ein Sparrenanteil an der Gesamtfläche von 11% erreicht. Die maximale Belegung mit Dämmung, das heißt der maximale Belegungsgrad, beträgt demnach 89%.

Es ist festgestellt worden, daß für verschiedene Dicken der Vakuumdämmplatte 2 ein Wärmedurchgangskoeffizient von 0,24 W/m² · K auch schon bei geringen Belegungsgraden erreicht wird. Bei Untersuchungen unter Einsatz des erfindungsgemäßen Dämmittels sind folgende Wärmedurchgangskoefizienten (U-Wert in W/m² · K (nach DIN 4108 T5)) erreicht worden:

| % Belegungsgrad mit Dämmitteln (1) | Dämmittel (1) Dicke in cm | | | |
|---|---|---|---|---|
| | 2 | 3 | 4 | 5 |
| 50 | 0,271 | 0,259 | 0,250 | 0,243 |
| 60 | 0,263 | 0,248 | 0,237 | 0,228 |
| 70 | 0,254 | 0,237 | 0,224 | 0,214 |
| 80 | 0,246 | 0,226 | 0,211 | 0,200 |

Nicht dargestellt ist, daß das erfindungsgemäße Dämmittel 1 auch Einsatz bei Flachdächern finden kann. Ein beispielhafter Aufbau enthält
- eine Betondecke,
- eine diffusionsdichte Schicht,
- ein erfindungsgemäßes Wärmedämmsystem 3,
- eine Abdichtung,
- eine Kiesschüttung,
- Platten.

Durch die geringe Aufbauhöhe des Wärmedämmsystems 3 bedingt durch das Dämmittel 1 können insbesondere Brüstungshöhen beibehalten werden.

Fig. 19 zeigt schematisch den Einsatz eines erfindungsgemäßen Wärmedämmsystems 3 als Fußbodendämmung. Dabei ist in Fig. 19 ein Trittschallschutz kombiniert. Dies muß jedoch nicht unbedingt realisiert werden.

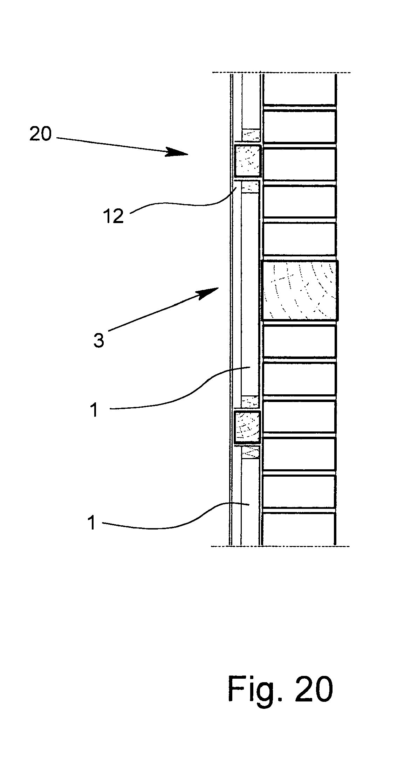

Die Fig. 20 zeigt die Anwendung des erfindungsgemäßen Wärmedämmsystems 3 als Innenwanddämmung. Dabei läßt sich der luftdichte Anschluß ohne zusätzlichen Arbeitsschritt mit der Verklebung des Randstreifens 12 herstellen.

Darüber hinaus ist die Anwendung als Außenwanddämmung möglich. Die Dämmung kann hier z. B. als Wärmedämmverbundsystem mit hinterlüfteter Fassade erfolgen. Weitere Anwendungsbeispiele bestehen im Einsatz bei Kellerdecken und in Tiefgaragen. Bei der nachträglichen Dämmung von Kellerdecken entstehen nur geringe Aufbauhöhen im Vergleich zu einer herkömmlichen Dämmung. Räume mit geringer Raumhöhe bleiben nutzbar. Dies gilt insbesondere für Heizkörpernischen, Rolladenkästen, bewohnbare Container, Kühlcontainer, Türen und oberste Geschoßdecken.

### Bezugszeichenliste:

- 1: Dämmittel
- 2: Vakuumdämmplatte
- 3: Wärmedämmsystem
- 4: Kern
- 5: Hülle
- 6: Unterseite
- 7: Oberseite
- 8: Dämmrand
- 9: Randseite
- 10: Dämmschicht
- 11: Dämmschicht
- 12: Randstreifen
- 13: Folie
- 14: Klebestreifen
- 15: Abtrennhilfe
- 16: Abtrennhilfe
- 17: Dämmstreifen
- 18: Bausatz
- 19: Verpackung
- 20: Gebäudehülle
- 21: Sparren
- 22: Kehlbalken
- 23: HWL-Platte
- 24: Lage
- 25: Lage
- 26: Unterspannbahn

## Patentansprüche

1. Dämmmittel (1) mit wenigstens einer Vakuumdämmplatte (2) zur Herstellung eines Wärmedämmsystems (3), wobei randseitig ein mit dem Dämmmittel (1) fest verbundener Dämmrand (8) aus einem kompressiblen Dämmstoff vorgesehen ist
**dadurch gekennzeichnet,**
**dass** der kompressible Dämmstoff eine Komprimierbarkeit von größer 25%, insbesondere größer 50% aufweist, so dass der kompressible Dämmrand (8) zur Einspannung des Dämmmittels (1) zwischen zwei Bauteilen dienen kann.

2. Dämmmittel nach Anspruch 1, **dadurch gekennzeichnet, dass** der Dämmrand (8) an wenigstens einer Randseite (9) der Vakuumdämmplatte (2) vorgesehen ist und dass, vorzugsweise, der Dämmrand (8) als umlaufender Rahmen ausgebildet ist.

3. Dämmmittel nach Anspruch 1 oder 2, **dadurch gekennzeichnet, dass** ober- und/oder unterseitig eine mit dem Dämmmittel (1) fest verbundene Dämmschicht (10, 11) aus einem kompressiblen Dämmstoff vorgesehen ist.

4. Dämmmittel nach einem der vorhergehenden Ansprüche, **dadurch gekennzeichnet, dass** der kompressible Dämmstoff eine Wärmeleitfähigkeit zwischen 0,025 bis 0,060 W/m · K, vorzugsweise zwischen 0,030 bis 0,050 W/m · K und insbesondere zwischen 0,032 und 0,040 W/m · K aufweist.

5. Dämmmittel (1) mit wenigstens einer Vakuumdämmplatte (2) zur Herstellung eines Wärmedämmsystems (3), insbesondere nach einem der vorhergehenden Ansprüche, wobei randseitig ein abstehender flacher Randstreifen (12) des Dämmmittels (1) vorgesehen ist, dessen Dicke um ein Mehrfaches geringer ist als die Dicke der Vakuumdämmplatte (2),
**dadurch gekennzeichnet,**
**dass** der Randstreifen (12) von der Randseite (9) der Vakuumdämmplatte (2) wenigstens um einen solchen Betrag absteht, der größer ist als die Dicke der Vakuumdämmplatte (2) zuzüglich wenigstens 5 cm.

6. Dämmmittel nach Anspruch 5, **dadurch gekennzeichnet, dass** am Randstreifen (12) ein Klebestreifen (14) vorgesehen ist und/oder dass der Randstreifen (12) luftdicht und/oder dampfdicht ist oder dass der Randstreifen (12) diffusionsoffen ist oder feuchtevariable Diffusionseigenschaften aufweist.

7. Dämmmittel nach Anspruch 5 oder 6, **dadurch gekennzeichnet, dass** der überstehende Randstreifen (12) von der Hülle (5) der Vakuumdämmplatte (2), wenigstens einem angefügten Folienstreifen oder einer unter- oder oberseitig angefügten Folie (13) gebildet wird.

8. Dämmmittel nach einem der Ansprüche 5 bis 7, **dadurch gekennzeichnet, dass** der Randstreifen (12) an wenigstens einer Randseite (9) der Vakuumdämmplatte vorgesehen ist und, dass, vorzugsweise, der Randstreifen (12) als umlaufender Rahmen ausgebildet ist.

9. Dämmmittel nach einem der vorhergehenden Ansprüche, **dadurch gekennzeichnet, dass** wenigstens zwei lamellenartig ausgebildete, voneinander beabstandete und miteinander verbundene Vakuumdämmplatten (2) vorgesehen sind oder dass die Vakuumdämmplatte (2) in ihrer Hülle (5) wenigstens zwei separate, insbesondere voneinander beabstandete lamellenförmige Plattenelemente aufweist.

10. Dämmmittel nach Anspruch 9, **dadurch gekennzeichnet, dass** zwischen den miteinander verbundenen Vakuumdämmplatten (1) oder den Plattenelementen jeweils wenigstens ein Dämmstreifen (17) aus kompressiblem Dämmstoff vorgesehen ist.

11. Wärmedämmsystem (3) mit wenigstens einem Dämmmittel (1) nach einem der vorhergehenden Ansprüche.

12. Wärmedämmsystem nach Anspruch 11, **dadurch gekennzeichnet, dass** ein Bausatz (18) mit wenigstens zwei Dämmmitteln (1) unterschiedlicher Größe vorgesehen ist.

13. Dämmmittel nach Anspruch 12, **dadurch gekennzeichnet, dass** der Bausatz (18) eine gemeinsame Verpackung (19) für die Dämmmittel (1) aufweist.

14. Gebäudehülle (20) mit wenigstens einem Wärmedämmsystem (3) nach einem der Ansprüche 11 bis 13.

## Claims

1. An insulating means (1) having at least one vacuum insulation board (2) for producing a heat insulating system (3),
wherein
an insulating edge (8) rigidly connected to the insulating means (1) made of a compressible insulating material is provided at the edge,
**characterized in that** the compressible insulating material has a compressibility of greater than 25%, in particular greater than 50%, so that the compressible insulating edge (8) can serve for fixing the insulating means (1) between two components.

2. An insulating means according to claim 1, **characterized in that** the insulating edge (8) is provided on at least one edge side (9) of the vacuum insulation board (2) and that, preferably, the insulating edge (8) is designed as a circumferential frame.

3. An insulating means according to claim 1 or 2, **characterized in that** an insulating layer rigidly connected to the insulating means made of a compressible insulating material is provided on the upper and/or lower side.

4. An insulating means according to one of the preceding claims, **characterized in that** the compressible insulating material has a thermal conductivity of between 0.025 to 0.060 W/m.K, preferably between 0.030 to 0.050 W/m.K and in particular between 0.032 and 0.040 W/m.K.

5. An insulating means (1) having at least one vacuum insulation board (2) for producing a thermal insulation system (3), in particular according to one of the preceding claims, wherein a protruding flat edge strip (12) of the insulating means (1) is provided at the edge, the thickness of which is several times less that the thickness of the vacuum insulation board (2),
**characterized in**
**that** the edge strip (12) protrudes from the edge side (9) of the vacuum insulation board (2) at least by such an amount, which is greater than the thickness of the vacuum insulation board (2) plus at least 5 cm.

6. An insulating means according to claim 5, **characterized in that** an adhesive strip (14) is provided on the edge strip (12) and/or that the edge strip (12) is airtight and/or steam-tight or that the edge strip (12) is open to diffusion or has humidity-variable diffusion properties.

7. An insulating means according to claim 5 or 6, **characterized in that** the protruding edge strip (12) is formed from the shell (5) of the vacuum insulation board (2), at least one attached foil strip or one foil (13) attached at the lower or upper side.

8. An insulating means according to one of claims 5 to 7, **characterized in that** the edge strip (12) is provided on at least one edge side (9) of the vacuum insulation board and, that, preferably, the edge strip (12) is designed as a circumferential frame.

9. An insulating means according to one of the preceding claims, **characterized in that** at least two vacuum insulation boards (2) are provided designed in lamella form, spaced apart from each other and connected with each other or that the vacuum insulation board (2) in its shell (5) has at least two separate board elements in particular in lamella form spaced apart from each other.

10. An insulating means according to claim 9, **characterized in that** between the vacuum insulation boards (1) connected with each other or the board elements in each case at least one insulating strip (17) made of a compressible insulating material is provided.

11. A thermal insulation system (3) having at least one insulating means (1) according to one of the preceding claims.

12. A thermal insulation system according to claim 11, **characterized in that** an assembly kit (18) is provided having at least two insulating means (1) of different sizes.

13. An insulating means according to claim 12, **characterized in that** the assembly kit (18) has a common packaging (19) for the insulating means (1).

14. A building envelope (20) with at least one thermal insulation system (3) according to one of claims 11 to 13.

## Revendications

1. Moyen isolant (1) ayant au moins un panneau isolant sous vide (2) pour la réalisation d'un système d'isolation thermique (3),
dans lequel il est prévu sur une bordure un bord isolant (8) constitué d'un matériau isolant compressible relié de façon fixe avec le moyen isolant (1),
**caractérisé en ce que** le matériau isolant compressible présente une compressibilité supérieure à 25 %, et en particulier supérieure à 50 %, de telle sorte que le bord isolant compressible (8) peut servir à l'insertion du moyen isolant (1) entre deux éléments de construction.

2. Moyen isolant selon la revendication 1, **caractérisé en ce que** le bord isolant (8) est prévu sur au moins une bordure (9) du panneau isolant sous vide (2) et **en ce que** le bord isolant (8) est de préférence réalisé comme encadrement périphérique.

3. Moyen isolant selon la revendication 1 ou 2, **caractérisé en ce qu'**il est prévu, sur le côté supérieur et/ou inférieur, une couche isolante (10, 11) constituée d'un matériau isolant compressible reliée de façon fixe avec le moyen isolant (1).

4. Moyen isolant selon l'une des revendications précédentes, **caractérisé en ce que** le matériau isolant compressible présente une conductivité thermique comprise entre 0,025 et 0,060 W/m · K, de préférence entre 0,030 et 0,050 W/m · K et en particulier entre 0,032 et 0,040 W/m · K.

5. Moyen isolant (1) ayant au moins un panneau isolant sous vide (2) pour la réalisation d'un système d'isolation thermique (3), en particulier selon l'une des revendications précédentes, dans lequel il est prévu sur une bordure une bande latérale plate (12) dépassant du moyen isolant (1), dont l'épaisseur est inférieure d'un multiple à l'épaisseur du panneau isolant sous vide (2),
**caractérisé**
**en ce que** la bande latérale (12) dépasse la bordure (9) du panneau isolant sous vide (2) au moins d'une dimension qui est supérieure à l'épaisseur du panneau isolant sous vide (2) augmentée d'au moins 5 cm.

6. Moyen isolant selon la revendication 5, **caractérisé en ce qu'**il est prévu sur la bande latérale (12) une bande adhésive (14) et/ou **en ce que** la bande latérale (12) est étanche à l'air et/ou à la vapeur ou **en ce que** la bande latérale (12) est ouverte à la diffusion ou présente des propriétés de diffusion à humidité variable.

7. Moyen isolant selon la revendication 5 ou 6, **caractérisé en ce que** la bande latérale (12) en saillie est formée par l'enveloppe (5) du panneau isolant sous vide (2), au moins une bande de film ajoutée ou un film (13) ajouté sur le côté inférieur ou supérieur.

8. Moyen isolant selon l'une des revendications 5 à 7, **caractérisé en ce que** la bande latérale (12) est prévue sur au moins une bordure (9) du panneau isolant sous vide et **en ce que** la bande latérale (12) est de préférence réalisée comme encadrement périphérique.

9. Moyen isolant selon l'une des revendications précédentes, **caractérisé en ce qu'**il est prévu au moins deux panneaux isolants sous vide (2) réalisés à la manière de lamelles, à distance l'un de l'autre et reliés l'un avec l'autre ou **en ce que** le panneau isolant sous vide (2) présente dans son enveloppe (5) au moins deux éléments de panneau en forme de lamelles distincts, en particulier à distance l'un de l'autre.

10. Moyen isolant selon la revendication 9, **caractérisé en ce qu'**il est prévu respectivement entre les panneaux isolants sous vide reliés l'un avec l'autre (1) ou entre les éléments de panneau au moins une bande isolante (17) constituée d'un matériau isolant compressible.

11. Système d'isolation thermique (3) ayant au moins un moyen isolant (1) selon l'une des revendications précédentes.

12. Système d'isolation thermique selon la revendication 11, **caractérisé en ce qu'**il est prévu un kit de construction (18) comprenant au moins deux moyens isolants (1) de différentes dimensions.

13. Système d'isolation thermique selon la revendication 12, **caractérisé en ce que** le kit de construction (18) présente un emballage commun (19) pour les moyens isolants (1).

14. Enveloppe de bâtiment (20) comprenant au moins un système d'isolation thermique (3) selon l'une des revendications 11 à 13.
